# EUROPÄISCHE PATENTSCHRIFT

(11) **EP 1 242 322 B1**
(45) Veröffentlichungstag und Bekanntmachung des Hinweises auf die Patenterteilung: **23.07.2003**
(21) Anmeldenummer: 00981346.0
(22) Anmeldetag: 07.12.2000
(51) Int. Cl.: C03B 33/09

(54) **VERFAHREN UND VORRICHTUNG ZUM DURCHTRENNEN VON FLACHEN WERKSTÜCKEN AUS SPRÖDBRÜCHIGEM MATERIAL**
METHOD AND DEVICE FOR CUTTING FLAT WORK PIECES MADE OF A BRITTLE MATERIAL
PROCEDE ET DISPOSITIF POUR SECTIONNER DES PIECES PLATES CONSTITUEES D'UN MATERIAU FRAGILE

(30) Priorität: 11.12.1999 DE 19959921
(43) Veröffentlichungstag der Anmeldung: 25.09.2002
(73) Patentinhaber: Schott Glas, 55122 Mainz (DE); CARL-ZEISS-STIFTUNG trading as SCHOTT GLAS, 55122 Mainz (DE)
(72) Erfinder: HAUER, Dirk, 26954 Nordenham-Ellwürden (DE); HOETZEL, Berndt, 55286 Wörrstadt (DE)
(74) Vertreter: Fuchs Mehler Weiss & Fritzsche
(86) Internationale Anmeldenummer: EP0012331
(87) Internationale Veröffentlichungsnummer: WO01042152

(56) Entgegenhaltungen:
- WO-A-93/20015

## Beschreibung

Die Erfindung bezieht sich auf ein Verfahren zum Durchtrennen von flachen Werkstücken aus sprödbrüchigem Material, insbesondere Glas oder Keramik, bei dem ein Laserstrahl mit einem durch Scannen erzeugten linienförmigen Brennfleck mit nachlaufendem Kühlfleck entlang einer Trennlinie mit vorgegebener Kontur bewegt wird. Eine bevorzugte Anwendung ist dabei das Schneiden von Flachglas.

Die Erfindung bezieht sich ferner auf eine Vorrichtung zum Durchtrennen eines derartigen Werkstückes mittels eines Laserstrahles in Form eines linienförmigen Strahlprofils mit nachlaufendem Kühlspot.

Konventionelle Trennverfahren für Flachglas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen (Ritz-Brech-Methode). Nachteilig ist bei diesem Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, sowohl Splitter als auch Ausmuschelungen und Mikrorisse zu vermeiden, besteht im Trennen von Glas auf der Basis thermisch generierter mechanischer Spannung. Hierbei wird eine Wärmequelle, die auf das Glas gerichtet ist, mit fester Geschwindigkeit relativ zu dem Glas bewegt und so eine derart hohe thermomechanische Spannung erzeugt, daß das Glas Risse bildet. Der notwendigen Eigenschaft der Wärmequelle, die thermische Energie lokal, d. h. mit einer Genauigkeit besser einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Dabei ist es sowohl möglich, das Glas durch den Laserstrahl zunächst zu ritzen, um es anschließend mechanisch zu brechen, als auch das Glas direkt mit dem Strahl in Verbindung mit einem mechanisch aufgebrachten Startriß zu durchtrennen, d.h. zu schneiden. Sowohl das "Ritzen-Brechen" als auch das "Schneiden" soll von dem Begriff "Trennen" bzw. "Durchtrennen" umfaßt werden.

Dieses Laserstrahl-Trennverfahren, das durch eine lokale Erwärmung durch den fokussierten Laserstrahl in Verbindung mit einer Kühlung von außen eine thermomechanische Spannung bis über die Bruchfestigkeit des Werkstoffes induziert, ist durch mehrere Schriften bekannt geworden, beispielsweise durch die EP 0 872 303 A 2.

Die vorgenannten Laserstrahl-Trennverfahren unterscheiden sich insbesondere durch die Konfiguration des Brennfleckes. So nutzt das Verfahren nach der DE 693 04 194 T 2 einen Laserstrahl mit elliptischem Querschnitt mit nachlaufendem Kühlspot.

Die bereits zitierte EP 0 872 303 A 2 beschreibt ein Laserstrahl-Trennverfahren, das einen Brennfleck mit einer U- bzw. V-förmigen Kontur vorsieht, die sich in der Trennrichtung öffnet. Auch davon abgewandelte Konturen, wie X-förmige Brennflecke, werden beschrieben. In beiden Fällen haben die Laserstrahl-Brennflecke eine zweidimensionale Struktur, die sich bei der Ausführung von geraden Schnitten gut bewährt hat. Bei der Ausführung von Freiformschnitten müßten der Kontur der Trennlinie angepaßte, gekrümmte zweidimensionale Brennflecke erzeugt und der Kontur samt der nachfolgenden Kühlung nachgefahren werden. Dies würde insbesondere eine Kopplung der den jeweiligen zweidimensionalen Brennfleck erzeugenden Scannereinrichtung und der Kühlspoteinrichtung mit einer Bahnsteuerung erfordern, deren Realisierung infolge der großen auszutauschenden Datenmengen einerseits und der geforderten Schnittgeschwindigkeiten andererseits sehr problematisch ist.

Durch die DE 43 05 107 C 2 ist ein Laserstrahl-Trennverfahren bekannt geworden, bei dem der Laserstrahl so geformt ist, daß sein Strahlquerschnitt auf der Oberfläche des Werkstückes eine linienförmige Form aufweist, bei dem das Verhältnis von Länge und Breite des auftreffenden Strahlquerschnittes mittels einer Blende im Laserstrahlengang einstellbar ist. Auch dieses Verfahren ist in seiner Einsatzfähigkeit stark eingeschränkt. Es können keine Freiformschnitte durchgeführt werden, und, da die Kühlung erst nach dem vollständigen Erwärmen der Trennlinie, z.B. durch Anblasen mittels kalter Druckluft, aufgebracht werden soll, eignet sich das bekannte Verfahren praktisch ebenfalls nur für das beschriebene Abschneiden des Preßrandes von Hohlgläsern, bei dem sich das Hohlglas im ortsfesten Laserstrahl dreht, wobei zunächst umfänglich der Rand durch den Laserstrahl erwärmt und anschließend durch Aufblasen des Gases unterstützend gekühlt wird.

Der Erfindung liegt die Aufgabe zugrunde, das eingangs bezeichnete Verfahren so zu führen bzw. die zugehörige Vorrichtung so auszubilden, daß auf relativ einfache Weise Freiformschnitte mit dem Laserstrahl-Trennverfähren durchführbar sind.

Ausgehend von dem Verfahren zum Durchtrennen von flachen Werkstücken aus sprödbrüchigem Material, bei dem ein Laserstrahl mit einem linienförmigen Strahlprofil mit nachlaufendem Kühlfleck entlang einer Trennlinie mit vorgegebener Kontur bewegt wird, gelingt die Lösung der Aufgabe verfahrensmäßig dadurch, daß zum Durchführen von Freiformschnitten auf dem Werkstück ein linienförmiger Brennfleck mit signifikanten Intensitätserhöhungen an beiden Enden erzeugt wird, bei dem mindestens 60 % der Strahlleistung an den Enden des linienförmigen Brennfleckes konzentriert ist, und der so entlang der Trennlinie bewegt wird, daß auch bei gekrümmter Trennlinie beide Enden auf der Trennlinie liegen und dessen Länge dabei abhängig von der Krümmung der Kontur der Trennlinie eingestellt wird.

Durch diese Maßnahmen ist es möglich, mit einem relativ einfachen Verfahren Freiformschnitte mit beliebiger Kontur zu erzeugen, da die überwiegende Energie in den Brennfleck-Enden konzentriert ist und diese auf der Trennlinie gehalten werden, unter Anpassung der Länge des Brennfleckes an die Krümmung der Kontur, damit bei kleinen Krümmungsradien die Brennflecklänge entsprechend kurz und bei großen Radien entsprechend lang ist, um den notwendigen Energieeintrag auf der Trennlinie zu gewährleisten.

Um ein Aufschmelzen des Materials des Werkstückes zu vermeiden, wird das Verfahren nach einer Ausgestaltung der Erfindung so geführt, daß die Laserleistung abhängig von der Länge des linienförmigen Brennfleckes eingestellt wird.

Das Verfahren läßt sich gemäß einer anderen Ausgestaltung der Erfindung in vorteilhafter Weise relativ einfach durchführen, wenn der linienförmige Brennfleck durch Scannen des Laserstrahles erzeugt wird.

Hinsichtlich der Vorrichtung zur Durchführung des erfindungsgemäßen Verfahrens gelingt die Lösung der Aufgabe dadurch, daß eine optische Anordnung mit einem Laserstrahlescanner und einer Fokussiereinrichtung zur Erzeugung eines linienförmigen Brennfleckes mit signifikanten Intensitätserhöhungen an beiden Enden, in denen mindestens 60 % der Strahlleistung konzentriert ist, vorgesehen ist, die über eine Profilsteuerung derart mit einer numerischen Bahnsteuerung gekoppelt ist, daß auch bei gekrümmten Trennlinien beide Enden des linienförmigen Brennfleckes auf der Trennlinie des Freiformschnittes positioniert sind und die Länge des Brennfleckes abhängig von der Krümmung der Kontur der Trennlinie eingestellt ist.

Wegen des linienförmigen Brennfleckes kann die optische Anordnung relativ einfach ausgeführt werden und es können auch übliche Bahnsteuerungen für das Bewegen der Enden des Brennfleckes auf der Trennlinie und der Anpassung der Länge des Brennfleckes an die Kontur der Trennlinie verwendet werden.

Ein optimales Trennen ist gewährleistet, wenn gemäß einer Ausgestaltung der Erfindung weitere mit der Bahnsteuerung gekoppelte Achsen zum Positionieren des Kühlfleckes in Bezug auf den linienförmigen Brennfleck und das Werkstück vorgesehen sind.

Die Vorrichtung kann gemäß einer weiteren Ausgestaltung der Erfindung besonders einfach aufgebaut werden, wenn die optische Anordnung einen Scanner mit einem Schwingspiegel aufweist. Zur Veränderung der Länge des linienförmigen Brennfleckes braucht dann lediglich die Schwingweite des Schwingspiegels verändert zu werden, so daß die Profilsteuerung und die Bahnsteuerung relativ einfach gestaltet werden können.

Weitere Merkmale und Vorteile der Erfindung ergeben sich anhand der Beschreibung eines in der Zeichnung dargestellten Ausführungsbeispieles.

Es zeigen:
- Fig. 1: in einer schematischen Blockschaltbild-Darstellung den prinzipiellen Aufbau der Kontur-Steuerung der erfindungsgemäßen Vorrichtung, und
- Fig. 2: in einer schematischen, diagrammartigen Darstellung die Form des Brennfleckes und des Kühlfleckes sowie die zugehörigen Bewegungsachsen, die von der Kontursteuerung zu verarbeiten sind.

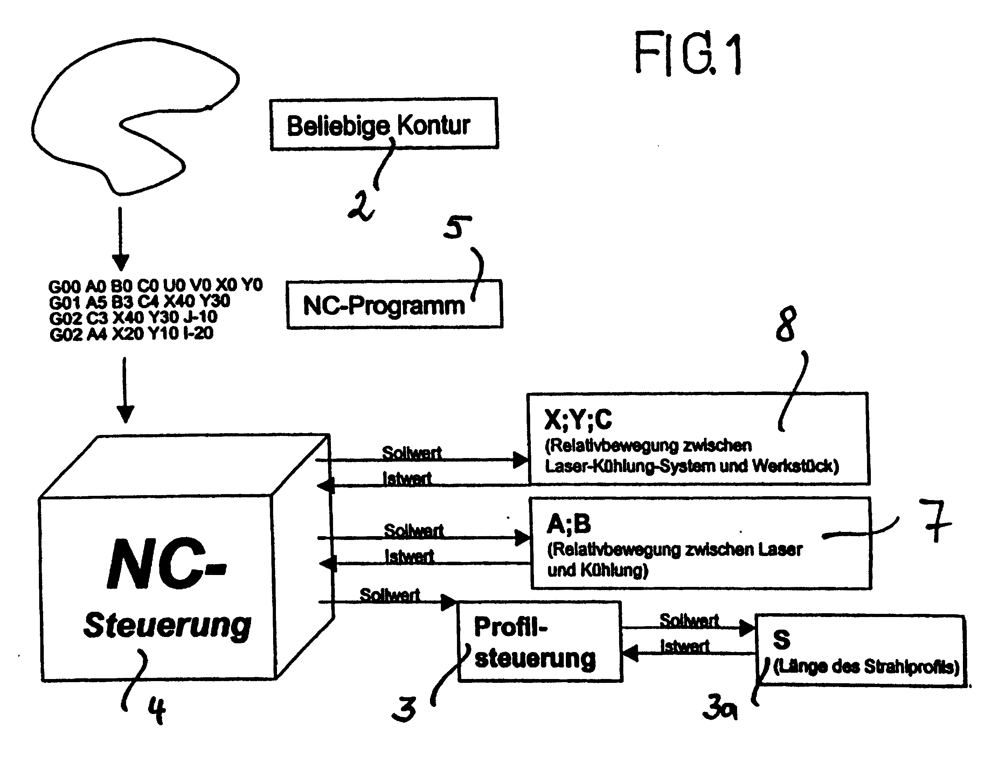

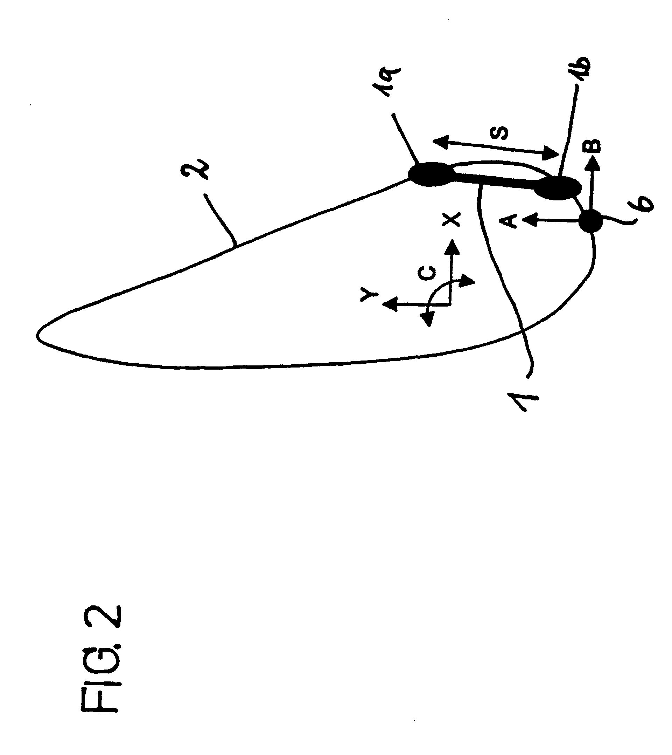

In den Figuren 1 und 2 ist das erfindungsgemäße Prinzip der Durchtrennung eines flachen Werkstückes aus sprödbrüchigem Material, insbesondere von Flachglas, mittels des Laserstrahl-Trennverfahrens dargestellt, wobei die Fig. 1 den prinzipiellen Aufbau der Steuerung der Bewegungsabläufe entlang einer vorgegebenen Kontur und die Fig. 2 die Brennfleckgeometrie des Laserstrahles mit dem nachlaufenden Kühlfleck und die Zuordnung der Bewegungsachsen zu der Kontursteuerung nach Fig. 1 zeigt.

Das erfindungsgemäße Trennprinzip beruht auf einem linienförmigen Brennfleck 1, an dessen beiden Enden 1 a und 1 b sich die Intensitätsmaxima im entsprechenden Laserstrahlprofil befinden. Durch diese Intensitätserhöhungen am Ende der Linie befindet sich dort beispielsweise ca. 80 % der gesamten eingebrachten Wärmeenergie des Laserstrahles, die zur Erzeugung des thermomechanischen Spannungsfeldes genutzt wird, d.h. nur ca. 20 % der Energie befinden sich neben der zu durchtrennenden Kontur, der Trennlinie 2.

Dadurch ist es möglich, bei gekrümmten Trennlinien den linienförmigen Brennfleck 1 als Linie beizubehalten, wenn die Endpunkte der Linie 1 unter Anpassung der Linienlänge S an den Krümmungsradius auf der Trennlinie 2 geführt werden, so daß der Haupt-Energieeintrag auf der Trennlinie erfolgt und ein sauberes Durchtrennen entlang der Trennlinie ermöglicht wird. Ist die Trennlinie linear, kann die Linie relativ lang sein. Je kleiner der Krümmungsradius ist, umso kürzer muß die Linie 1 sein, damit der Hauptenergie-Eintrag auf der Trennlinie erfolgt. Die Linienlänge variiert hierbei zwischen 10 mm und 100 mm. Parallel zur Änderung der Linienlänge wird zweckmäßig die Laserleistung bei kurzen Linien heruntergeregelt und bei langen Linien heraufgeregelt.

Zur Erzeugung des linienförmigen Brennfleckes 1 wird vorzugsweise ein bekannter Laserstrahl-Scanner, z.B. entsprechend Fig. 5 der eingangs zitierten EP 0 872 303 A 2, verwendet, wobei jedoch einer der beiden Ablenkspiegel entfallen kann, da nur in einer Achsrichtung gescannt werden muß. Denn für die Erzeugung einer Linie ist eine Ablenkachse ausreichend, was mit Vorteil einen reduzierten technischen Aufwand indiziert.

Auch kann ein Scannen mittels eines Drehspiegels mit einfachen, ebenen Spiegelflächen entsprechend Fig. 6 der vorgenannten EP-Schrift und einen entsprechenden, vorzugsweise sinusförmigen Drehzahlverlauf (Polygonrad) Anwendung finden.

Durch das Scannen des Laserstrahles mit Schwingspiegeln oder Polygonrädern mit sinusförmigem Drehzahlverlauf verbleibt der Laserstrahl in den Umkehrpunkten der Scannerbewegung länger auf dem zu trennenden Werkstück als im Bereich dazwischen, d.h. bei einer Erzeugung des linienförmigen Brennfleckes 1 durch Scannen stellt sich typischerweise eine Intensitätserhöhung an den Endpunkten der Linie 1 ein.

Beim typischen Scannen mit Schwingspiegeln weisen diese eine Schwingfrequenz von 400 Hz und höher auf, wobei die Schwingweite der Schwingspiegel die Linienlänge S in Fig. 1 bestimmt. Die Steuerung des Scanners erfolgt durch eine Profilsteuerung 3 in Fig. 1. Diese Steuerung empfängt von einer NC-Steuerung den Sollwert für die an der jeweiligen Stelle der Trennlinie 2 erforderliche Länge S des Brennflecks 1. Die Profilsteuerung steuert nun einen Oszillatormotor 3 a des Schwingspiegels so an, daß er die für die geforderte Länge S des Profils entsprechende Schwingung ausführt. Die Profilsteuerung 3 erzeugt hierbei eine analoge Spannungsschwingung als Sollwert, der direkt von dem Oszillatormotor zu einer oszillierenden Bewegung umgesetzt wird. Der Sollwert, welcher von der NC-Steuerung 4 an die Profilsteuerung 3 gegeben wird, wird entweder in Form eines analogen konstanten Spannungssignals, z.B. 0 - 10 V, übergeben, wobei die Länge S proportional zur Höhe der Spannung ist, oder in Form eines digitalen Wertes mit einer Auflösung von mindestens 8 bit. Die dargestellte Istwertrückmeldung des Meßsystems des Oszillatormotors 3 a kann entfallen, wenn für den Oszillatormotor eine Kalibrierkurve in der Profilsteuerung 3 oder der NC-Steuerung 4 abgelegt ist.

Damit die Endpunkte der Brennlinie 1 auf der gewünschten Trennlinie 2 liegen, steuert die NC-Steuerung 4 die NC-Achsen 8 (X, Y und C) und die Profillänge S über die Sollwertvorgabe an die Profilsteuerung 3 nach einem bekannten NC-Programm 5 und entsprechenden in der NC-Steuerung abgelegten Interpolationsalgorithmen. Mit den Informationen über die Profillänge S, die Position bzw. die Geschwindigkeiten der Achsen X, Y und C und der durch ein NC-Programm 5 beschriebenen Form der Trennlinie 2, ist die NC-Steuerung in der Lage, die Endpunkte 1 a und 1 b der Brennlinie 1 so zu führen, daß sie mit einer maximalen Abweichung von typischerweise weniger als 0,2 mm die Trennlinie verfolgen. Die Verfolgung der Trennlinie ist umso genauer, je schneller die NC-Steuerung in der Lage ist, neue Sollwerte für die Achsen 8 und die Profilsteuerung 3 zu generieren und je schneller diese von den Achsen 8 und dem Oszillatormotor 3 a umgesetzt werden können. Typische Werte für die Anwendung werden nach heutigem Stand der Steuerungstechnik bei ca. 3 ms liegen.

Die Breite der Brennlinie 1 wird durch den Durchmesser des fokussierten Laserstrahles auf der Werkstückoberfläche vorgegeben. Der Durchmesser auf der Werkstückoberfläche liegt typischerweise zwischen 0,3 mm und mehreren Millimetern. Zur Fokussierung des Laserstrahles werden optische Elemente verwendet. Bei der Auswahl der optischen Elemente und des Lasers ist es Ziel, die Intensitätsverteilung entlang der Linie zwischen den Endpunkten 1 a und 1 b möglichst gleichmäßig ohne lokale Intensitätspeaks zu gestalten, sowie die maximale Intensität in den Endpunkten möglichst gering zu halten. Auf diese Weise kann die meiste Laserenergie in das Werkstück eingekoppelt werden, ohne daß die Glaserweichungstemperatur überschritten wird. Zu diesem Zweck können langbrennweitige fokussierende Elemente ab ca. 300 mm, Top-Hat-Linsen, Axikons oder Laser mit einem Ringmode oder Multimode eingesetzt werden. Die Breite der Linie ist dabei abhängig von der benötigen Laserleistung, Kühlung, Materialart, Materialdicke und Vorschubgeschwindigkeit.

Zur Erhöhung der thermomechanischen Spannung wird in bekannter Weise eine Kühlung in Form eines Kühlflecks 6 in einem definierten Abstand auf der durchzutrennenden Kontur 2 hinter dem Laserprofil, d.h. der Brennlinie 1, nachgeführt. Dieser Kühlfleck 6 wird beispielsweise durch Aufblasen von kalter Luft oder Gas/Flüssigkeitsgemische durch eine Düse erzeugt.

Durch die hohe Temperatur im Werkstück, die durch den Laserstrahl erzeugt wird, wird eine hohe thermomechanische Spannung entlang der zu trennenden Kontur im Werkstück erzeugt. Bei nachfolgender Kühlung und vorheriger Schwächung des Glases am Startpunkt des Schnittes/Risses, reißt das Glas entlang der durch die Kühldüse und die "Strahllinie" beschriebene Kontur.

Wegen der gezielten Erwärmung des Werkstücks entlang der durchzutrennenden Kontur und der an der Kontur in einem definierenden Abstand zwischen ca. 2 mm und 15 mm nachgeführten Kühlung, folgt der Schnitt sehr präzise jeder beliebigen Freiform. Auf diese Weise können beispielsweise bei Dünnglas (ca. 50 µm), aber auch bei dickem Glas (mehrere Millimeter) jede beliebige Geometrie durchschnitten oder bis zu einer Tiefe von mehreren Zehntel Millimetern geritzt werden.

Der Vorteil des Schneidens besteht darin, daß kein anschließendes Brechen notwendig ist und somit ein Fertigungsschritt eingespart wird. Der Vorteil des Ritzens besteht darin, daß mit wesentlich höheren Geschwindigkeiten (bis zu 1000 mm/s) der Werkstoff auch nach dem Brechen nahezu splitterfrei getrennt wurde und aufgrund von fehlenden Mikrorissen und Ausmuschelungen eine deutlich höhere Kantenfestigkeit erreicht wird. Um dies zu erreichen, muß auch die Kühlung, d.h. der Kühlfleck 6, sehr präzise in seiner Position relativ zu der Brennlinie 1 eingestellt werden.

Die in Fig. 1 dargestellten Achsen 7 (A und B), welche für die Nachführung der Kühldüse auf der Trennlinie 2 verantwortlich sind, sind ebenfalls mit der NC-Steuerung 4 verbunden. Die Achsen A und B interpolieren ebenfalls mit den Achsen X, Y, C und der vom Oszillatormotor 3 a vorgegebenen Achse.

Die Aufgabe der Achsen A und B ist es, den Abstand des Kühlflecks 6 zum Anfangspunkt 1 b der Brennlinie 1 konstant zu halten. Die Profilsteuerung 3 kann hierbei so gestaltet werden, daß der niedrigste Spannungswert der Schwingspannung für den Oszillator des Schwingspiegels immer konstant bleibt. Auf diese Weise ist der Punkt 1 b relativ zum Kühlfleck ortsfest. Die Achsen 7 A und B müssen somit nur kurze Hübe ausführen.

Unter Achsen im Sinne der Erfindung sollen nicht nur die geometrischen Achsen, sondern auch die zugehörigen, die Achsen vorgebenden Bewegungselemente, wie Aktuatoren und dergleichen verstanden werden.

## Patentansprüche

1. Verfahren zum Durchtrennen von flachen Werkstücken aus sprödbrüchigem Material, bei dem ein Laserstrahl mit einem durch Scannen erzeugten linienförmigen Brennfleck mit nachlaufendem Kühlfleck entlang einer Trennlinie mit vorgegebener Kontur auf dem Werkstück bewegt wird, **dadurch gekennzeichnet, daß** zum Durchführen von Freiformschnitten auf dem Werkstück ein linienförmiger Brennfleck mit signifikanten Intensitätserhöhungen an beiden Enden erzeugt wird, bei dem mindestens 60 % der Strahlleistung an den Enden des linienförmigen Brennfleckes konzentriert ist, und der so entlang der Trennlinie bewegt wird, daß auch bei gekrümmter Trennlinie beide Enden auf der Trennlinie liegen und dessen Länge dabei abhängig von der Krümmung der Kontur der Trennlinie eingestellt wird.

2. Verfahren nach Anspruch 1, **dadurch gekennzeichnet, daß** 80 % der Strahlleistung an den Enden des linienförmigen Brennfleckes konzentriert ist.

3. Verfahren nach Anspruch 1 oder 2, **dadurch gekennzeichnet, daß** die Strahlleistung abhängig von der Länge des linienförmigen Brennfleckes eingestellt wird.

4. Vorrichtung zum Durchführen des Verfahrens nach Anspruch 1 oder 2, **dadurch gekennzeichnet, daß** eine optische Anordnung mit einem Laserstrahlscanner und einer Fokussionseinrichtung zur Erzeugung eines linienförmigen Brennfleckes (1) mit signifikanten Intensitätserhöhungen an beiden Enden (1 a, 1 b), in denen mindestens 60 % der Strahlleistung konzentriert ist, vorgesehen ist, die über eine Profilsteuerung (3) derart mit einer numerischen Bahnsteuerung (4) mit Achsen zum Positionieren des Brennfleckes (1) gekoppelt ist, daß auch bei gekrümmten Trennlinien beide Enden des linienförmigen Brennfleckes (1) auf der Trennlinie (2) des Freiformschnittes positioniert sind und die Länge des Brennfleckes abhängig von der Krümmung der Kontur der Trennlinie (2) eingestellt ist.

5. Vorrichtung nach Anspruch 4, **dadurch gekennzeichnet, daß** weitere mit der Bahnsteuerung (4) gekoppelte Achsen (7, 8) zum Positionieren des Kühlfleckes (6) in Bezug auf den linienförmigen Brennfleck (1) und das Werkstück vorgesehen sind.

6. Vorrichtung nach Anspruch 4 oder 5, **dadurch gekennzeichnet, daß** die optische Anordnung einen Scanner mit einem Schwingspiegel aufweist.

## Claims

1. Method for cutting flat workpieces made from brittle material, in which a laser beam having a linear focal spot, which is produced by scanning, followed by a cooling spot is moved along a dividing line having a specified contour on the workpiece, **characterized in that** to make freeform cuts on the workpiece, a linear focal spot having significant intensity increases at the two ends is generated, in which focal spot at least 60% of the beam power is concentrated at the ends of the linear focal spot, and which focal spot is moved along the dividing line in such a way that, even with a curved dividing line, both ends lie on the dividing line, and the length of which focal spot is adjusted as a function of the curvature of the contour of the dividing line.

2. Method according to Claim 1, **characterized in that** 80% of the beam power is concentrated at the ends of the linear focal spot.

3. Method according to Claim 1 or 2, **characterized in that** the beam power is adjusted as a function of the length of the linear focal spot.

4. Device for carrying out the method according to Claim 1 or 2, **characterized in that** an optical arrangement having a laser beam scanner and a focussing device for generating a linear focal spot (1) with significant intensity increases at both ends (la, 1b), in which at least 60% of the beam power is concentrated, is provided, this arrangement being coupled, by means of a profile control unit (3), to a digital trajectory control unit (4) with axes for positioning the focal spot (1), in such a manner that even if the dividing lines are curved both ends of the linear focal spot (1) are positioned on the dividing line (2) of the freeform cut, and the length of the focal spot is adjusted as a function of the curvature of the contour of the dividing line (2).

5. Device according to Claim 4, **characterized in that** there are further axes (7, 8), which are coupled to the trajectory control unit (4), for positioning the cooling spot (6) with respect to the linear focal spot (1) and the workpiece.

6. Device according to Claim 4 or 5, **characterized in that** the optical arrangement has a scanner with an oscillating mirror.

## Revendications

1. Procédé pour sectionner des pièces plates constituées d'un matériau fragile, dans lequel un faisceau laser avec un foyer linéaire produit par balayage et suivi d'une zone de refroidissement est déplacé le long d'une ligne de découpage de contour prédéterminé sur la pièce, **caractérisé en ce que**, pour exécuter des découpes de forme libre, on produit sur la pièce un foyer linéaire avec des augmentations importantes de l'intensité aux deux extrémités, dans lequel au moins 60 % de la puissance du faisceau sont concentrés aux extrémités du foyer linéaire, et on le déplace le long de la ligne de découpage de telle façon que, même avec une ligne de découpage courbe, les deux extrémités soient situées sur la ligne de découpage et que sa longueur soit en l'occurrence réglée en fonction de la courbure du contour de la ligne de découpage.

2. Procédé selon la revendication 1, **caractérisé en ce que** 80 % de la puissance du faisceau sont concentrés aux extrémités du foyer linéaire.

3. Procédé selon la revendication 1 ou 2, **caractérisé en ce que** la puissance du faisceau est réglée en fonction de la longueur du foyer linéaire.

4. Dispositif pour la mise en oeuvre du procédé selon la revendication 1 ou 2, **caractérisé en ce qu'**il est prévu un dispositif optique avec un scanner à faisceau laser et un dispositif de focalisation pour la production d'un foyer linéaire (1) avec des augmentations importantes de l'intensité aux deux extrémités (1a, 1b), sur lesquelles au moins 60 % de la puissance du faisceau sont concentrés, dispositif. optique qui est couplé par une commande de profil (3) avec une commande numérique de trajectoire (4) avec des axes pour le positionnement du foyer (1) de telle façon que, même avec des lignes de découpage courbes, les deux extrémités du foyer linéaire (1) soient positionnées sur la ligne de découpage (2) de la découpe de forme libre et que la longueur du foyer soit réglée en fonction de la courbure du contour de la ligne de découpage (2).

5. Dispositif selon la revendication 4, **caractérisé en ce qu'**il est prévu plusieurs axes (7, 8) couplés avec la commande de trajectoire (4) pour le positionnement de la zone de refroidissement (6) par rapport au foyer linéaire (1) et à la pièce.

6. Dispositif selon la revendication 4 ou 5, **caractérisé en ce que** le dispositif optique présente un scanner avec un miroir oscillant.
